(19) **Europäisches Patentamt**
**European Patent Office**
**Office européen des brevets**

(11) **EP 3 022 784 B1**

(12) **FASCICULE DE BREVET EUROPEEN**

(45) Date de publication et mention
de la délivrance du brevet:
**07.06.2017 Bulletin 2017/23**

(51) Int Cl.:
*H01M 2/10 (2006.01)*    *H01M 2/12 (2006.01)*
*H01G 11/18 (2013.01)*   *H01G 11/62 (2013.01)*
*H01G 11/78 (2013.01)*   *H01G 11/84 (2013.01)*
*H01M 2/34 (2006.01)*    *H01M 10/42 (2006.01)*

(21) Numéro de dépôt: **14741557.4**

(22) Date de dépôt: **15.07.2014**

(86) Numéro de dépôt international:
**PCT/EP2014/065156**

(87) Numéro de publication internationale:
**WO 2015/007736 (22.01.2015 Gazette 2015/03)**

(54) **ENSEMBLE DE STOCKAGE D'ENERGIE ELECTRIQUE COMPRENANT UN ACCELERATEUR DE MONTEE EN PRESSION**

ANORDNUNG ZUM SPEICHERN ELEKTRISCHER ENERGIE MIT EINEM DRUCKERHÖHUNGSBESCHLEUNIGER

ASSEMBLY FOR STORING ELECTRICAL ENERGY, COMPRISING A PRESSURE-INCREASING ACCELERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2013 FR 1356971**

(43) Date de publication de la demande:
**25.05.2016 Bulletin 2016/21**

(73) Titulaire: **Blue Solutions**
**29500 Ergué Gabéric (FR)**

(72) Inventeurs:
• **BAYLARD, Eric**
**F-29480 Le Relecq Kerhuon (FR)**
• **DREZEN, Thierry**
**F-29120 Pont l'Abbé (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**EP-A1- 1 806 807          EP-A1- 2 219 247**
**WO-A1-2004/049494      FR-A1- 2 910 723**
**US-A1- 2005 106 451**

## Description

### DOMAINE TECHNIQUE

La présente invention concerne le domaine technique général des ensembles de stockage d'énergie électrique.

On entend, dans le cadre de la présente invention, par « *ensemble de stockage d'énergie électrique* », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et un électrolyte entre l'anode et la cathode).

### PRESENTATION GENERALE DE L'ART ANTERIEUR

Un ensemble de stockage d'énergie électrique - par exemple du type supercondensateur - comprend classiquement une enveloppe comportant un corps tel qu'un élément tubulaire ouvert à ses deux extrémités, un enroulement capacitif et un électrolyte liquide à l'intérieur de l'enveloppe. L'ensemble comprend également deux couvercles pour fermer les deux extrémités du corps. Chaque couvercle est connecté électriquement à l'enroulement capacitif.

Un tel ensemble peut être utilisé dans de nombreuses applications, comme des applications automobiles.

Lorsqu'il est soumis à de fortes températures, par exemple du fait d'un incendie, l'électrolyte liquide peut s'évaporer, cette évaporation induisant une augmentation de la pression à l'intérieur de l'ensemble.

Il y a alors un risque pour que l'ensemble explose sous l'effet de l'augmentation de sa pression interne.

Pour améliorer la sécurité d'un tel ensemble, on connaît deux solutions supposées limiter les risques d'explosion lorsque l'ensemble est soumis à de fortes températures.

La première solution consiste à former une zone fragilisée dans l'enveloppe, notamment le corps. Cette zone fragilisée est destinée à se rompre lorsque la pression à l'intérieur de l'ensemble dépasse une valeur seuil.

La rupture de cette zone fragilisée induit alors la formation d'une aération permettant au gaz contenu dans l'enveloppe de s'échapper à l'extérieur de l'ensemble.

Toutefois, on a pu constater que cette première solution n'était pas satisfaisante, la présence d'une zone fragilisée n'évitant pas systématiquement l'explosion de l'ensemble lorsqu'il est soumis à un feu.

En effet, la qualité de tenue mécanique de la liaison des couvercles sur le corps diminue rapidement sous l'effet de la chaleur, de sorte que certaines pièces (couvercles notamment) de l'ensemble sont éjectées violemment avant même que la zone fragilisée ne se rompe.

Une deuxième solution consiste à former un orifice traversant dans l'enveloppe, et à obstruer l'orifice grâce à une pastille soudée en utilisant un métal dont la température de fusion est :

- supérieure à la température maximale de fonctionnement de l'ensemble, et
- inférieure à la température minimale à partir de laquelle la tenue mécanique des pièces de l'ensemble se dégrade.

Le principe de fonctionnement d'un ensemble basé sur cette deuxième solution est le suivant. Dans le cas d'un incendie, la pression à l'intérieur de l'ensemble augmente, et la soudure métallique réalisée sur la pastille se met à fondre. La pastille se décroche de l'enveloppe, laissant l'orifice libre. Cet orifice permet alors le dégazage de l'ensemble. On évite ainsi les risques d'explosion de l'ensemble.

Ainsi avec cette deuxième solution, l'ouverture de l'ensemble n'est plus uniquement fonction de sa pression interne, mais est également de sa température.

Toutefois, cette deuxième solution présente également des inconvénients.

Notamment, les risques d'explosion ne sont pas totalement éradiqués avec cette deuxième solution. En effet, on a constaté que la pastille disposée sur l'orifice ne se décrochait pas toujours suffisamment rapidement.

Par ailleurs, les étapes de formation de l'orifice et de recouvrement de l'orifice à l'aide d'une pastille complexifient le procédé de fabrication d'un tel ensemble. Le document FR2910723 décrit un ensemble de stockage d'énergie électrique qui comprend un élément réactif qui génère une surpression lors d'un réchauffement anormal. Le document EP1806807 décrit un ensemble comprenant une capsule qui se déchire et génère un gaz lors d'un réchauffement anormal de l'ensemble. Un but de la présente invention est de fournir un ensemble de stockage d'énergie électrique permettant de pallier au moins l'un des inconvénients précités.

### PRESENTATION DE L'INVENTION

A cet effet, l'invention propose un ensemble de stockage d'énergie électrique comprenant :

- une enveloppe comportant :

  ○ un corps ayant au moins une paroi latérale et au moins une extrémité ouverte,
  ○ au moins un couvercle (20) pour fermer l'au moins une extrémité ouverte du corps

- au moins un élément de stockage d'énergie situé à l'intérieur de l'enveloppe, et
- une solution d'électrolyte également à l'intérieur de l'enveloppe,

remarquable en ce que l'ensemble de stockage comprend en outre :

- des moyens de rupture locale de l'enveloppe lorsque la pression à l'intérieur de l'enveloppe est supérieure à un seuil de pression, et
- un accélérateur de montée en pression pour générer une surpression à l'intérieur de l'ensemble lorsque la température à l'intérieur de l'ensemble est supérieure à un seuil de température, l'accélérateur comprenant au moins un logement étanche, chaque logement contenant au moins un agent de suppression, ledit ou lesdits logements étanches étant configurés pour libérer le ou les agents de suppression lorsque la température à l'intérieur de l'ensemble est supérieure au seuil de température et au moins une paroi dudit logement étant conçue dans un matériau dont la température de fusion est sensiblement égale au seuil de température.

La présence d'un logement étanche permet de garantir le confinement de l'agent de surpression lorsque la température à l'intérieur de l'enceinte est inférieure au seuil de température.

L'utilisation d'un matériau dont la température de fusion est sensiblement égale au seuil de température permet d'obtenir un accélérateur de montée en pression dépourvu d'élément électronique - tel qu'un capteur de température - et donc d'obtenir un accélérateur de montée en pression ne consommant pas d'énergie électrique pour assurer sa fonction,

- la température de fusion du matériau est comprise entre 120°C et 140°C ;
cette gamme de température de fusion permet de garantir une libération de l'agent de surpression pour une température à l'intérieur de l'ensemble :

  ○ supérieure à la température de fonctionnement de l'ensemble et,
  ○ inférieure à la température critique de dégradation de la qualité des liaisons mécaniques de l'ensemble.

Avantageusement, le seuil de température est supérieur à la température maximale de fonctionnement de l'ensemble. Ceci permet d'éviter les risques d'ouverture non désirée de l'ensemble. Ce seuil de température peut également être inférieur à une température critique au-delà de laquelle la qualité des liaisons mécaniques de l'ensemble se dégrade. Par ailleurs, le seuil de pression est de préférence inférieur à une pression critique au-delà de laquelle l'ensemble risque d'exploser.

De préférence, le seuil de température est compris entre 120°C et 140°C.

Les moyens de rupture locale de l'enveloppe peuvent consister en une zone mécaniquement fragilisée de l'enveloppe.

La présence d'un accélérateur de montée en pression permet de rompre plus rapidement cette zone fragilisée.

En effet, lorsque la température interne de l'ensemble dépasse un seuil de température, l'accélérateur génère une pression « additionnelle » P2 qui vient s'ajouter à la pression « naturelle » P1 à l'intérieur de l'ensemble. La pression totale Ptot à l'intérieur de l'ensemble est alors égale à la somme de la pression « naturelle » P1 et de la pression « additionnelle » P2 :

$$\text{Ptot} = \text{P1} + \text{P2}.$$

Cet ajout de pression « additionnelle » P2 induit une accélération de la montée en pression de l'ensemble. La pression totale Ptot dépasse alors plus rapidement une pression limite de rupture de la zone fragilisée avant que la température n'atteigne la température critique mentionnée précédemment.

La zone fragilisée se rompt donc plus rapidement qu'avec les solutions de l'art antérieur, ce qui permet d'évacuer les gaz contenus dans l'ensemble avant que celui-ci n'explose.

Un autre avantage de l'invention est qu'elle permet d'aboutir à l'ouverture plus rapide de l'ensemble sans influer sur sa tenue.

En effet, dans le cas de la première solution décrite ci-dessus, une autre option pour aboutir à l'ouverture plus rapide de l'ensemble pourrait consister à affaiblir d'avantage la zone fragilisée mécaniquement. Toutefois, une telle option induirait une diminution de la pression à partir de laquelle s'ouvre l'ensemble à sa température de fonctionnement et donc de la résistance mécanique de l'ensemble rendant difficile son utilisation dans certains domaines d'application tels que le domaine automobile.

Des aspects préférés mais non limitatifs de l'ensemble selon l'invention sont les suivants :

- l'accélérateur est apte à déclencher une réaction chimique générant un gaz dans l'ensemble lorsque la température à l'intérieur de l'ensemble est supérieure au seuil de température ;
ceci permet de simplifier le processus de génération d'une surpression,
- l'accélérateur est disposé à l'intérieur de l'enveloppe, notamment dans un volume mort de l'enveloppe (i.e. un espace inutilisé de l'enveloppe). En particulier, l'élément de stockage placé dans l'enveloppe est bobiné de façon à présenter une forme cylindrique et à présenter un évidement central, l'accélérateur étant placé dans l'évidement ;
ceci permet de limiter l'encombrement de l'ensemble et même d'insérer un accélérateur selon l'invention sans modifier les dimensions de l'ensemble,
- l'au moins une paroi délimitant le ou l'un des logements est dans un matériau plastique choisi parmi du polypropylène, du polyéthylène, du polycarbonate, du polystyrène, du polyoxyméthylène, du polyamide, du polyesther, du polyuréthane ou un élastomère ;

- le logement est une capsule creuse comportant une tête et un corps emmanchés l'un dans l'autre, tel qu'une gélule comportant une tête et un corps cylindriques, chacun ouverts à une extrémité et dont les fonds sont par exemple hémisphériques ;

- le ou les agents de surpression sont aptes à générer un gaz, choisi parmi le dihydrogène ($H_2$), le dioxyde de carbone ($CO_2$) et le diazote ($N_2$), lorsqu'ils sont libérés du ou des logements étanches. Ces gaz sont en effet non toxiques et non polluants ;

- le ou les agents de surpression forment des réactifs choisis pour réagir avec l'électrolyte de l'ensemble. Par exemple, l'agent de surpression est de l'eau et l'électrolyte comprend un sel d'ammonium ($TEABF_4$ ou $TEMABF_4$ notamment) en solution, la réaction du sel avec l'eau générant du dihydrogène dans l'enveloppe ;

- en variante, le ou l'au moins un des agents de surpression pourrait réagir avec un composant de l'électrode ou avec un séparateur de l'élément de stockage,

- l'ensemble comprend une pluralité d'agents de surpression, situés dans un unique logement ou dans différents logements (matérialisés par exemple par une même capsule ou deux capsules différentes) choisis pour réagir ensemble lorsqu'ils sont placés en solution,

- la pluralité d'agents de surpression comprend un premier réactif comportant un acide carboxylique (R-COOH) et un deuxième réactif à base de carbonate ($X_2CO_3$) ou de bicarbonate ($XHCO_3$) ;

- les moyens de rupture locale de l'enveloppe comprennent une zone mécaniquement fragilisée destinée à se rompre lorsque la pression à l'intérieur de l'ensemble est supérieure au seuil de pression ;

- la zone mécaniquement fragilisée est un bossage ou une arête ou une région de l'ensemble dont l'épaisseur est inférieure à l'épaisseur des autres régions de l'ensemble ;

- les moyens de rupture locale de l'enveloppe sont localisés sur la paroi latérale de l'enveloppe, à savoir sur le corps.

L'invention concerne également un module de stockage d'énergie électrique incluant un boîtier, remarquable en ce qu'il comprend au moins un ensemble de stockage d'énergie électrique tel que décrit ci-dessus.

L'invention concerne également un procédé de fabrication d'un ensemble de stockage d'énergie électrique comprenant :

- une enveloppe comportant :

  ◦ un corps ayant au moins une paroi latérale et au moins une extrémité ouverte,
  ◦ au moins un couvercle pour fermer l'au moins une extrémité ouverte du corps,

- au moins un élément de stockage d'énergie placé à l'intérieur de l'enveloppe,

- une solution d'électrolyte également placée à l'intérieur de l'enveloppe, et

le procédé comprenant les étapes consistant à :

- associer un accélérateur de montée en pression à l'ensemble, notamment en disposant l'accélérateur dans l'enveloppe, l'accélérateur permettant de générer une surpression à l'intérieur de l'ensemble lorsque la température à l'intérieur de l'ensemble est supérieure à un seuil de température, l'accélérateur comprenant au moins un logement étanche, chaque logement contenant au moins un agent de suppression, ledit ou lesdits logements étanches étant configurés pour libérer le ou les agents de suppression lorsque la température à l'intérieur de l'ensemble est supérieure au seuil de température et au moins une paroi dudit logement étant conçue dans un matériau dont la température de fusion est sensiblement égale au seuil de température, et

- former des moyens de rupture locale de l'enveloppe lorsque la pression à l'intérieur de l'enveloppe est supérieure à un seuil de pression, notamment en formant une zone fragilisée mécaniquement sur l'enveloppe.

## PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :

- La figure 1A illustre une représentation schématique en coupe radiale d'un ensemble de stockage d'énergie électrique,

- La figure 1 B illustre une représentation schématique en coupe axiale de l'enveloppe de l'ensemble de la figure 1A selon A-A,

- La figure 2 illustre un exemple d'accélérateur de montée en pression de l'ensemble.

## DESCRIPTION DE L'INVENTION

On va maintenant décrire différents modes de réalisation de l'invention en référence aux figures. Dans ces différentes figures, les éléments équivalents portent les mêmes références numériques.

## 1. Ensemble

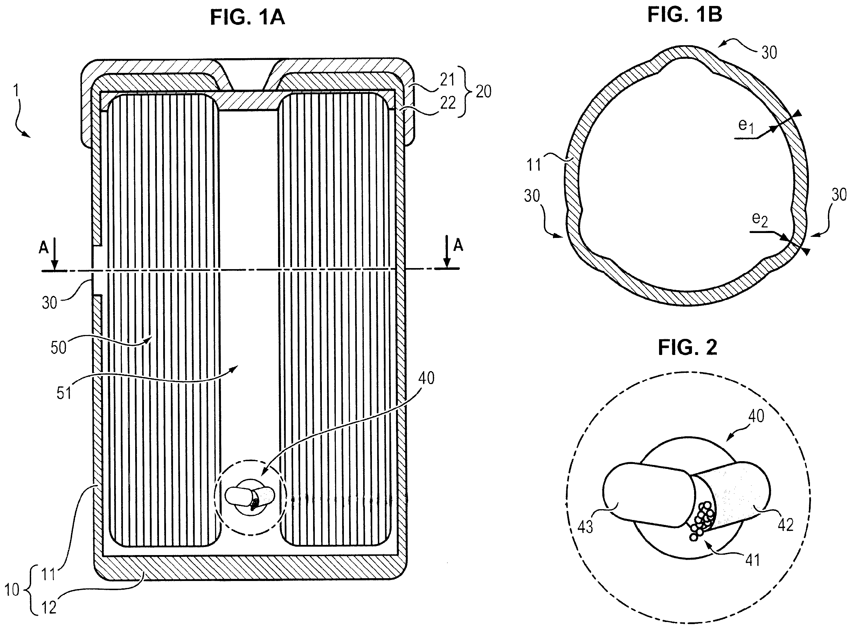

En référence à la figure 1 on a illustré un exemple d'ensemble 1. Cet ensemble 1 comporte une enveloppe comportant :

- un corps 10 contenant un électrolyte liquide et un élément de stockage d'énergie électrique 50, et
- un (ou plusieurs) couvercle(s) 20 destiné(s) à fermer le corps 10 pour rendre l'ensemble 1 étanche.

### 1.1. Elément

L'élément 50 est par exemple une bobine constituée de complexes et de séparateurs sensiblement plans et enroulés conjointement en spire pour former la bobine.

On entend, dans le cadre de la présente invention, par « *complexe* », un empilement comportant au moins deux couches distinctes, notamment une couche de cathode et une couche d'électrolyte.

Cet élément est immergé dans un électrolyte liquide contenu dans l'enveloppe. L'électrolyte peut être un liquide ionique.

En variante, l'électrolyte peut comprendre un solvant (organique ou non) et un sel. Le sel peut être un sel d'ammonium tel que du $TEABF_4$, $TEMABF_4$, des sels lithiés ($LIPF_6$, LITFSI, LiFSI, $LiBF_4$, $LiClO_4$...), des sels spyro (SBP-BF4 5-azoniaspiro(4-4) nonane tetrafluoroborate), des sulfates (Na2SO4, K2SO4, H2SO), KOH, NaOH. Le solvant peut être de l'eau, de l'acétonitrile, des alkylcarbonates cycliques (carbonate de propylène, carbonate d'éthylène...), des alkylcarbonates acycliques (DMC, DEC...), des sulfones (sulfolane...).

### 1.2. Enveloppe

Le corps 10 de l'enveloppe comprend une paroi latérale 11, éventuellement cylindrique.

Dans certaines variantes de réalisation, le corps 10 comprend un fond 12 à l'une de ses extrémités et est ouvert à son autre extrémité pour permettre l'insertion de l'élément 50 dans le corps 10. De préférence, la face externe du fond 12 est sensiblement plane pour permettre le soudage d'une barrette en tout point de sa surface.

Dans d'autres variantes de réalisation, le corps 10 est ouvert à ses deux extrémités. Dans tous les cas, chaque extrémité ouverte du corps 10 est fermée par un couvercle 20.

L'enveloppe 10 peut comprendre une portion fragilisée mécaniquement 30. Lors d'une augmentation de la pression à l'intérieur de l'ensemble au-delà d'un seuil de pression, la portion fragilisée 30 est conçue pour se rompre afin de laisser échapper le gaz contenu dans l'ensemble 1.

La portion fragilisée 30 peut être une portion amincie de l'enveloppe, c'est-à-dire une portion dont l'épaisseur est inférieure aux autres régions de l'enveloppe 10. En variante, la portion fragilisée 30 peut être un bossage ou une arête formant zone d'amorce de rupture.

Cette portion fragilisée 30 peut s'étendre sur le fond 12 ou sur la paroi latérale 11 du corps 10. Dans le mode de réalisation illustré à la figure 1, la portion fragilisée 30 s'étend sur une partie de la circonférence de la paroi latérale 11.

La portion fragilisée 30 peut être formée en poinçonnant la paroi latérale 11 (ou le fond 12) de l'enveloppe 10 en une pluralité de points (notamment trois ou quatre) répartis sur le pourtour de la paroi latérale 11. Un bossage complémentaire du poinçon est alors formé et l'épaisseur e2 de la paroi au niveau de ce bossage est diminuée localement par rapport à l'épaisseur e1 de la paroi au niveau du reste de l'ensemble du fait de la déformation induite par la formation du bossage. On a représenté sur la figure 1 B une coupe axiale de l'enveloppe dans sa partie comportant les bossages qui illustre cette configuration.

### 1.3. Couvercle

Chaque couvercle 20 comprend une paroi couvrante 21 pour fermer l'extrémité ouverte du corps.

La paroi couvrante 21 comprend deux faces :

- une face interne destinée à être connectée à l'élément 50, et
- une face externe destinée à être liée, notamment par soudage, à une barrette (non représentée).

De préférence, la face externe du couvercle 20 est sensiblement plane. Plus précisément, cette face externe est de préférence dépourvue de pion en son centre et de bord à sa périphérie. Ceci permet de maximiser la surface du couvercle 20 pouvant être soudé à la barrette.

Chaque couvercle 20 peut également comprendre une jupe 22 à la périphérie de la paroi couvrante 21, cette jupe 22 étant destinée à recouvrir partiellement la paroi latérale 11 de l'enveloppe 10.

### 1.4. Accélérateur de montée en pression

L'ensemble de stockage comprend également un accélérateur de montée en pression 40.

Le but de l'accélérateur 40 est de générer une surpression à l'intérieur de l'ensemble 1 lorsque la température interne de celui-ci dépasse un seuil de température.

L'accélérateur 40 comprend généralement un logement étanche contenant un agent de surpression, la libération de l'agent de surpression générant une surpression dans l'ensemble.

Différents types d'accélérateur peuvent être utilisés.

Par exemple, l'accélérateur peut être un système « actif » et comprendre :

- une cartouche (i.e. logement étanche) contenant de l'air comprimé (i.e. agent de surpression) et fermée par un opercule déplaçable entre une position ouverte et une position fermée,
- un capteur de température pour mesurer la température à l'intérieur de l'ensemble,
- un contrôleur pour :

  ○ comparer la température mesurée par le capteur à un seuil de température, et pour
  ○ commander l'ouverture de l'opercule lorsque la température mesurée dépasse le seuil de température.

De préférence, l'accélérateur 40 peut être un système « passif » tel que l'accélérateur illustré à la figure 2, plus simple à mettre en oeuvre et moins coûteux à fabriquer. s

Cet accélérateur 40 comprend une capsule creuse (délimitant le logement étanche) contenant un (ou plusieurs) réactif(s) (i.e. agent de surpression).

Ce (ou ces) réactif(s) 41 déclenche(nt) une réaction chimique lorsqu'il(s) est (sont) libéré(s) dans l'ensemble 1 afin de générer un gaz. C'est la génération de ce gaz qui induit une surpression à l'intérieur de l'ensemble 1.

*1.4.1. Capsule*

La capsule comporte une tête 42 et un corps 43 emmanchés l'un dans l'autre. En référence à la figure 2, la tête 42 (respectivement le corps 43) est cylindrique, ouverte à une extrémité et comporte un fond hémisphérique à son autre extrémité.

De préférence, la capsule est réalisée dans un matériau présentant une température de fusion :

- supérieure à la température maximale de fonctionnement de l'ensemble,
- inférieure à une température critique à partir de laquelle la tenue mécanique des pièces de l'ensemble se dégrade.

Notamment, la capsule peut être constituée dans un matériau dont la température de fusion est comprise entre 120°C et 140°C, comme par exemple :

- un thermoplastique, tel que le polypropylène (PP), le polyéthylène (PE), le polycarbonate (PC), le polystyrène (PS), le polyoxyméthylène (POM), ou le polyamide (PA),
- un plastique thermodurcissables, tel que le polyester ou le polyuréthane, ou
- un élastomère.

De préférence, la capsule peut comprendre au moins une zone d'épaisseur limitée ce qui permet d'obtenir une ouverture de la capsule dans ladite zone.

Dans certains modes de réalisation, la capsule creuse contient un réactif 41 choisi pour réagir avec un composant contenu dans l'ensemble, comme par exemple l'électrolyte contenu dans l'ensemble (ou encore la matière active des électrodes de l'élément).

Dans d'autres modes de réalisation, la capsule creuse contient plusieurs réactifs 41 destinés à réagir entre eux une fois en solution. Ceci présente l'avantage de disposer d'un accélérateur pouvant être utilisé dans chaque type d'électrolyte (aqueuse, organique) puisque le déclenchement de la réaction chimique ne dépend pas de la composition de l'électrolyte.

Ces réactifs destinés à réagir entre eux sont par exemple :

- inertes à l'état solide, et
- actifs lorsqu'ils sont dissous en solution.

Dans ce cas, les réactifs 41 sont stockés à l'état solide dans la capsule, leur libération induisant leur dissolution dans l'électrolyte de sorte qu'ils réagissent entre eux pour générer un gaz.

On peut également concevoir la capsule de sorte qu'elle contienne plusieurs logements contenant chacun un réactif. On peut également prévoir plusieurs capsule chacune comprenant un réactif.

On notera que dans le mode de réalisation de la figure 1A, la capsule est placée dans un évidement central 51 de l'ensemble de stockage, qui correspond à un espace de toute façon vide, nécessaire du fait du bobinage de l'élément de stockage 50. L'encombrement de l'accélérateur 40 est ainsi minimal puisqu'il n'oblige pas à augmenter le volume de l'ensemble 1.

La forme de la capsule n'est pas limitée à ce qui a été décrit. La capsule pourrait par exemple former un barreau cylindrique de hauteur égale à l'élément 50 bobiné et dont on se sert pour le bobinage de l'élément. Cette capsule pourrait alors être plus rigide, notamment pleine sur une partie de sa hauteur. Elle comprendrait quoi qu'il en soit un compartiment pour stocker l'agent de surpression.

*1.4.2. Réactifs*

Le (ou les) réactif(s) contenu(s) dans la capsule permet(tent) de générer un gaz - de préférence non polluant - tel que du dihydrogène ($H_2$), ou du dioxyde de carbone ($CO_2$) ou du diazote ($N_2$).

Le (ou les) réactif(s) peut (peuvent) être stocké(s) dans la capsule sous forme liquide. Par exemple, le réactif peut être de l'eau, cette eau réagissant avec un sel d'ammonium de l'électrolyte, tel que $TEABF_4$, pour former du dihydrogène lorsqu'elle est libérée dans l'électrolyte.

Le (ou les) réactif(s) peut (peuvent) également être stocké(s) dans la capsule sous forme solide. Par exemple, les réactifs peuvent consister en un mélange comportant :

- Un premier réactif présentant un groupement COOH (acide carboxylique), Formule générale : R -COOH;
- Un second réactif soluble et dont la dissolution permet de former :

> ◦ un ion bicarbonate ($HCO_3$-) - i.e. bicarbonate de soude ($NaHCO_3$) ou de calcium ($CaHCO_3$) ou de potassium ($KHCO_3$) ou de lithium ($LiHCO_3$), etc.
> Formule générale du réactif : $XHCO_3$ ;
> ◦ un ion carbonate ($CO_3^{2-}$) - i.e. carbonate de soude ($Na_2CO_3$) etc., Formule générale du réactif : $X_2CO_3$.

Ces réactifs, une fois dissous, déclenchent l'une des réactions chimiques suivantes :

> ◦ $X^+ + HCO_3^- + R\text{-}COOH \rightarrow CO_2 + H_2O + R\text{-}COO\text{-}X^+$,
> ◦ $2X^+ + CO_3^{2-} + R\text{-}COOH \rightarrow CO_2 + H_2O + 2R\text{-}COO\text{-}X^+$.

Le gaz généré par ces réactions chimiques est donc du dioxyde de carbone $CO_2$.

*2. Principe de fonctionnement*

On va maintenant décrire plus en détail le principe de fonctionnement de l'ensemble selon l'invention en référence à un accélérateur 40 constitué d'une capsule contenant un mélange de poudres d'acides organiques et de carbonates ou bicarbonates.

Lorsque l'ensemble est exposé à un feu, sa température interne augmente. La capsule contenant les réactifs atteint sa température de fusion. La capsule se met à fondre, libérant les réactifs dans l'électrolyte. Ces réactifs se dissolvent dans l'électrolyte et déclenchent une réaction chimique induisant la génération de dioxyde de carbone $CO_2$.

La surpression entrainée par la génération de dioxyde de carbone $CO_2$ crée une force de poussée sur l'enveloppe 10 dirigée vers l'extérieur de l'ensemble. La force de poussée entraîne la rupture de la portion fragilisée. La rupture de la zone fragilisée forme une aération pour le passage des fluides entre l'intérieur et l'extérieur de l'ensemble.

En conséquence, les gaz contenus dans l'ensemble s'échappent à l'extérieur de celui-ci, et la pression interne de l'ensemble devient égale à la pression atmosphérique.

On évite ainsi le risque d'explosion de l'ensemble.

*3. Conclusions*

Grâce à l'invention décrite ci-dessus, on peut donc éviter les risques d'explosion d'un ensemble en accélérant son ouverture lorsqu'il est soumis à une chaleur extrême.

Le lecteur aura compris que de nombreuses modifications peuvent être apportées à l'ensemble présenté ci-dessus sans sortir matériellement des nouveaux enseignements décrits ici.

Par exemple dans la description qui précède, la portion fragilisée s'étendait sur l'enveloppe externe de l'ensemble. En variante, la portion fragilisée pourrait s'étendre sur le (ou l'un des, ou les) couvercle(s).

Par conséquent, toutes les modifications de ce type sont destinées à être incorporées à l'intérieur de la portée des revendications jointes.

**Revendications**

1. Ensemble de stockage d'énergie électrique (1) comprenant :

   - une enveloppe comportant :

     ◦ un corps (10) ayant au moins une paroi latérale (11) et au moins une extrémité ouverte,
     ◦ au moins un couvercle (20) pour fermer l'au moins une extrémité ouverte du corps,

   - au moins un élément de stockage d'énergie (50) placé à l'intérieur de l'enveloppe,
   - une solution d'électrolyte également à l'intérieur de l'enveloppe, et

   **caractérisé en ce que** l'ensemble de stockage comprend en outre :

   - des moyens (30) de rupture locale de l'enveloppe lorsque la pression à l'intérieur de l'enveloppe est supérieure à un seuil de pression, et
   - un accélérateur de montée en pression (40) pour générer une surpression à l'intérieur de l'ensemble lorsque la température à l'intérieur de l'ensemble est supérieure à un seuil de température, l'accélérateur (40) comprenant au moins un logement étanche, chaque logement contenant au moins un agent de surpression, ledit ou lesdits logements étanches étant configurés pour libérer le ou les agents de surpression (41) lorsque la température à l'intérieur de l'ensemble est supérieure au seuil de température et au moins une paroi (42, 43) dudit logement étant conçue dans un matériau dont la température de fusion est sensiblement égale au seuil de température.

2. Ensemble selon la revendication 1, dans lequel le seuil de température est compris entre 120°C et 140°C.

**3.** Ensemble selon la revendication 1 ou 2, dans lequel l'accélérateur (40) est apte à déclencher une réaction chimique générant un gaz dans l'ensemble lorsque la température à l'intérieur de l'ensemble est supérieure au seuil de température.

**4.** Ensemble selon l'une quelconque des revendications précédentes, dans lequel l'accélérateur (40) est disposé à l'intérieur de l'enveloppe (10).

**5.** Ensemble selon la revendication précédente, dans lequel l'élément de stockage (50) placé dans l'enveloppe est bobiné de façon à présenter une forme cylindrique et à présenter un évidement central (51), l'accélérateur (40) étant placé dans l'évidement.

**6.** Ensemble selon l'une quelconque des revendications précédentes, dans lequel l'au moins une paroi (42, 43) délimitant le ou au moins l'un des logements est dans un matériau plastique choisi parmi du polypropylène, du polyéthylène, du polycarbonate, du polystyrène, du polyoxyméthylène, du polyamide, du polyesther, du polyuréthane ou un élastomère.

**7.** Ensemble selon la revendication précédente, dans lequel le ou les agents de surpression (41) sont aptes à générer un gaz choisi parmi le dihydrogène ($H_2$), le dioxyde de carbone ($CO_2$) ou le diazote ($N_2$) lorsqu'ils sont libérés du ou des logements étanches.

**8.** Ensemble selon la revendication précédente, dans lequel le ou les agents de surpression (41) forment des réactifs choisis pour réagir avec l'électrolyte de l'ensemble.

**9.** Ensemble selon la revendication précédente, dans lequel l'agent de surpression (41) est de l'eau ($H_2O$) et l'électrolyte comprend un sel d'ammonium en solution avec lequel l'eau réagit pour former du dihydrogène ($H_2$).

**10.** Ensemble selon l'une des revendications précédentes, comprenant une pluralité d'agents de surpression, agencés dans un unique logement ou dans des logements respectifs, et formant une pluralité de réactifs choisis pour réagir ensembles lorsqu'ils sont placés en solution.

**11.** Ensemble selon la revendication précédente, dans lequel la pluralité d'agents de surpression comprend un premier réactif comportant un acide carboxylique (R-COOH) et un deuxième réactif à base de carbonate ($X_2CO_3$) ou de bicarbonate ($XHCO_3$).

**12.** Ensemble selon l'une quelconque des revendications précédentes, dans lequel les moyens de rupture locale de l'enveloppe comprennent une zone (30) mécaniquement fragilisée destinée à se rompre lorsque la pression à l'intérieur de l'ensemble est supérieure au seuil de pression.

**13.** Ensemble selon la revendication précédente, dans lequel la zone mécaniquement fragilisée est un bossage ou une arête ou une région de l'ensemble dont l'épaisseur (e2) est inférieure à l'épaisseur (e1) des autres régions de l'ensemble.

**14.** Ensemble selon l'une des revendications précédentes, dans lequel les moyens de rupture locale de l'enveloppe sont localisés sur la paroi latérale (11) de l'enveloppe.

**15.** Module de stockage d'énergie électrique incluant un boîtier, **caractérisé en ce qu'**il comprend au moins un ensemble de stockage d'énergie électrique (1) selon l'une des revendications précédentes.

**16.** Procédé de fabrication d'un ensemble de stockage d'énergie électrique comprenant :

- une enveloppe comportant :

  ◦ un corps (10) ayant au moins une paroi latérale (11) et au moins une extrémité ouverte,
  ◦ au moins un couvercle (20) pour fermer l'au moins une extrémité ouverte du corps,

- au moins un élément de stockage d'énergie (50) placé à l'intérieur de l'enveloppe,
- une solution d'électrolyte également placée à l'intérieur de l'enveloppe, et

**caractérisé en ce qu'**il comprend les étapes consistant à :

- associer un accélérateur de montée en pression (40) à l'ensemble, notamment en disposant l'accélérateur dans l'enveloppe, l'accélérateur permettant de générer une surpression à l'intérieur de l'ensemble lorsque la température à l'intérieur de l'ensemble est supérieure à un seuil de température, l'accélérateur (40) comprenant au moins un logement étanche, chaque logement contenant au moins un agent de surpression, ledit ou lesdits logements étanches étant configurés pour libérer le ou les agents de surpression (41) lorsque la température à l'intérieur de l'ensemble est supérieure au seuil de température et au moins une paroi (42, 43) dudit logement étant conçue dans un matériau dont la température de fusion est sensiblement égale au seuil de température, et
- former des moyens de rupture locale de l'enveloppe lorsque la pression à l'intérieur de l'enveloppe est supérieure à un seuil de pression, notamment en formant une zone fragilisée mécaniquement sur l'enveloppe.

**Patentansprüche**

1. Anordnung zum Speichern elektrischer Energie (1), umfassend:

   - einen Mantel, aufweisend:

     ◦ einen Körper (10) mit mindestens einer Seitenwand (11) und mindestens einem offenen Ende,
     ◦ mindestens einen Deckel (20) zum Verschließen von mindestens einem offenen Ende des Körpers,

   - mindestens ein Element zum Speichern von Energie (50), das im Innern des Mantels platziert ist,
   - eine Elektrolytlösung, ebenfalls im Innern des Mantels, und

   **dadurch gekennzeichnet, dass** die Speicheranordnung ferner umfasst:

   - lokale Bruchmittel (30) des Mantels, wenn der Druck im Innern des Mantels höher als ein Druckgrenzwert ist, und
   - einen Druckanstiegsbeschleuniger (40) zum Erzeugen eines Überdrucks im Innern der Anordnung, wenn die Temperatur im Innern der Anordnung einen Temperaturgrenzwert überschreitet, wobei der Beschleuniger (40) mindestens eine dichte Aufnahme umfasst, wobei jede Aufnahme mindestens ein Überdruckmittel enthält, wobei die dichte(n) Aufnahme(n) konfiguriert ist/sind, um das oder die Überdruckmittel (41) freizusetzen, wenn die Temperatur im Innern der Anordnung den Temperaturgrenzwert überschreitet und mindestens eine Wand (42, 43) der Aufnahme aus einem Material gebildet ist, dessen Schmelztemperatur etwa dem Temperaturgrenzwert entspricht.

2. Anordnung nach Anspruch 1, wobei der Temperaturgrenzwert zwischen 120 °C und 140 °C inklusive ist.

3. Anordnung nach Anspruch 1 oder 2, wobei der Beschleuniger (40) imstande ist, eine chemische Reaktion auszulösen, bei der ein Gas in der Anordnung erzeugt wird, wenn die Temperatur im Innern der Anordnung den Temperaturgrenzwert überschreitet.

4. Anordnung nach einem der vorangehenden Ansprüche, wobei der Beschleuniger (40) im Innern des Mantels (10) angeordnet ist.

5. Anordnung nach vorangehendem Anspruch, wobei das im Mantel platzierte Speicherelement (50) derart gewickelt ist, dass es eine zylindrische Form aufweist und eine zentrale Aussparung (51) aufweist, wobei der Beschleuniger (40) in der Aussparung platziert ist.

6. Anordnung nach einem der vorangehenden Ansprüche, wobei mindestens eine Wand (42, 43), die die oder mindestens eine der Aufnahmen begrenzt, aus einem Kunststoffmaterial ist, das aus Polypropylen, Polyethylen, Polycarbonat, Polystyrol, Polyoxymethylen, Polyamid, Polyester, Polyurethan oder einem Elastomer ausgewählt ist.

7. Anordnung nach vorangehendem Anspruch, wobei das oder die Überdruckmittel (41) imstande sind, ein Gas zu erzeugen, das aus dem Di-Wasserstoff ($H_2$), dem Kohlendioxid ($CO_2$) oder dem Distickstoff ($N_2$) ausgewählt ist, wenn sie aus der oder den dichten Aufnahmen freigesetzt werden.

8. Anordnung nach vorangehendem Anspruch, wobei das oder die Überdruckmittel (41) Reaktionsmittel bilden, die ausgewählt sind, um mit dem Elektrolyt der Anordnung zu reagieren.

9. Anordnung nach vorangehendem Anspruch, wobei das Überdruckmittel (41) Wasser ($H_2O$) ist und der Elektrolyt ein gelöstes Ammoniumsalz umfasst, mit dem das Wasser reagiert, um Di-Wasserstoff ($H_2$) zu bilden.

10. Anordnung nach einem der vorangehenden Ansprüche, umfassend eine Vielzahl von Überdruckmitteln, die in einer einzigen Aufnahme oder in jeweiligen Aufnahmen angeordnet sind, und eine Vielzahl von Reaktionsmitteln bilden, die ausgewählt sind, um gemeinsam zu reagieren, wenn sie in Lösung platziert sind.

11. Anordnung nach vorangehendem Anspruch, wobei die Vielzahl von Überdruckmitteln ein erstes Reaktionsmittel umfasst, das eine Carboxylsäure (R-COOH) aufweist, und ein zweites Reaktionsmittel auf der Basis von Carbonat ($X_2CO_3$) oder von Bicarbonat ($XHCO_3$).

12. Anordnung nach einem der vorangehenden Ansprüche, wobei die lokalen Bruchmittel des Mantels eine mechanisch geschwächte Zone (30) umfassen, die bestimmt ist zu brechen, wenn der Druck im Innern der Anordnung den Druckgrenzwert überschreitet.

**13.** Anordnung nach vorangehendem Anspruch, wobei die mechanisch geschwächte Zone eine Wulst oder ein Grat oder eine Region der Anordnung ist, deren Dicke (e2) geringer als die Dicke (e1) der anderen Regionen der Anordnung ist.

**14.** Anordnung nach einem der vorangehenden Ansprüche, wobei die lokalen Bruchmittel des Mantels auf der Seitenwand (11) des Mantels lokalisiert sind.

**15.** Modul zum Speichern elektrischer Energie mit einem Gehäuse, **dadurch gekennzeichnet, dass** es mindestens eine Speicheranordnung elektrischer Energie (1) nach einem der vorangehenden Ansprüche umfasst.

**16.** Verfahren zur Herstellung einer Speicheranordnung elektrischer Energie, umfassend:

- einen Mantel, aufweisend:

◦ einen Körper (10) mit mindestens einer Seitenwand (11) und mindestens einem offenen Ende,
◦ mindestens einen Deckel (20) zum Verschließen von mindestens einem offenen Ende des Körpers,

- mindestens ein Element zum Speichern von Energie (50), das im Innern des Mantels platziert ist,
- eine Elektrolytlösung, ebenfalls im Innern des Mantels, und

**dadurch gekennzeichnet, dass** es die folgenden Schritte umfasst:

- zuordnen eines Druckanstiegsbeschleunigers (40) zu der Anordnung, insbesondere durch Anordnen des Beschleunigers in dem Mantel, wobei der Beschleuniger erlaubt, einen Überdruck im Innern der Anordnung zu erzeugen, wenn die Temperatur im Innern der Anordnung einen Temperaturgrenzwert überschreitet, wobei der Beschleuniger (40) mindestens eine dichte Aufnahme umfasst, wobei jede Aufnahme mindestens ein Überdruckmittel enthält, wobei die dichte(n) Aufnahme(n) konfiguriert ist/sind, um das oder die Überdruckmittel (41) freizusetzen, wenn die Temperatur im Innern der Anordnung den Temperaturgrenzwert überschreitet und mindestens eine Wand (42, 43) der Aufnahme aus einem Material gebildet ist, dessen Schmelztemperatur etwa dem Temperaturgrenzwert entspricht, und
- bilden der lokalen Bruchmittel des Mantels, wenn der Druck im Innern des Mantels einen Druckgrenzwert überschreitet, insbesondere durch Bilden einer mechanisch geschwächten Zone auf dem Mantel.

**Claims**

**1.** An electrical energy storage assembly (1) comprising:

- an envelope including:

◦ a body (10) having at least one side wall (11) and at least one open end,
◦ at least one lid (20) for closing said at least one open end of the body

- at least one energy storage element (50) placed inside the envelope,
- an electrolyte solution also inside the envelope, and

**characterized in that** the storage assembly further comprises:

- means (30) for locally breaking the envelope when the pressure inside the envelope is greater than a pressure threshold, and
- an pressure-raising accelerator (40) for generating overpressure inside the assembly when the temperature inside the assembly is greater than a temperature threshold, the accelerator (40) comprising at least one sealed housing, each housing containing at least one overpressure agent, said sealed housing(s) being configured for releasing the overpressure agent(s) (41) when the temperature inside the assembly is greater than the temperature threshold and at least one wall (42, 43) of said housing being designed in a material for which the melting temperature is substantially equal to the temperature threshold.

**2.** The assembly according to claim 1, wherein the temperature threshold is comprised between 120°C and 140°C.

**3.** The assembly according to claim 1 or 2, wherein the accelerator (40) is able to trigger a chemical reaction generating a gas in the assembly when the temperature inside the assembly is greater than the temperature threshold.

**4.** The assembly according to any one of the preceding claims, wherein the accelerator (40) is positioned inside the envelope (10).

**5.** The assembly according to the preceding claim, wherein the storage element (50) placed in the envelope is wound so as to have a cylindrical shape and to have a central recess (51), the accelerator (40) being placed in the recess.

6. The assembly according to any one of the preceding claims, wherein said at least one wall (42, 43) delimiting said or at least one of the housings is in a plastic material selected from polypropylene, polyethylene, polycarbonate, polystyrene, polyoxymethylene, polyamide, polyester, polyurethane or an elastomer.

7. The assembly according to the preceding claim, wherein said overpressure agent(s) (41) is (are) able to generate a gas selected from dihydrogen ($H_2$), carbon dioxide ($CO_2$) or dinitrogen ($N_2$) when they are released from the sealed housing(s).

8. The assembly according to the preceding claim, wherein said overpressure agent(s) (41) form reagents selected for reacting with the electrolyte of the assembly.

9. The assembly according to the preceding claim, wherein the overpressure agent (41) is water ($H_2O$) and the electrolyte comprises an ammonium salt in solution with which the water reacts for forming dihydrogen ($H_2$).

10. The assembly according to one of the preceding claims, comprising a plurality of overpressure agents, arranged in a single housing or in respective housings, and forming a plurality of reagents selected for reacting together when they are placed in solution.

11. The assembly according to the preceding claim, wherein the plurality of overpressure agents comprises a first reagent including a carboxylic acid (R-COOH) and a second reagent based on a carbonate ($X_2CO_3$) or bicarbonate ($XHCO_3$).

12. The assembly according to any one of the preceding claims, wherein the means for locally breaking the envelope comprise a mechanically embrittled area (30) intended to break when the pressure inside the assembly is greater than the pressure threshold.

13. The assembly according to the preceding claim, wherein the mechanically embrittled area is a boss or an edge or a region of the assembly, the thickness (e2) of which is less than the thickness (e1) of the other regions of the assembly.

14. The assembly according to one of the preceding claims, wherein the means for locally breaking the envelope are localized on the side wall (11) of the envelope.

15. An electrical energy storage module including a casing, **characterized in that** it comprises at least one electrical energy storage assembly (1) according to one of the preceding claims.

16. A method for manufacturing an electrical energy storage assembly comprising:

- an envelope including:

  ◦ a body (10) having at least one side wall (11) and at least one open end,
  ◦ at least one lid (20) for closing said at least one open end of the body

- at least one energy storage element (50) placed inside the envelope,
- an electrolyte solution also placed inside the envelope, and

**characterized in that** it comprises the steps of:

- associating a pressure-raising accelerator (40) with the assembly, notably by positioning the accelerator in the envelope, the accelerator giving the possibility of generating overpressure inside the assembly when the temperature inside the assembly is greater than a temperature threshold, the accelerator (40) comprising at least one sealed housing, each housing containing at least one overpressure agent, said sealed housing(s) being configured for releasing the overpressure agent(s) (41) when the temperature inside the assembly is greater than the temperature threshold and at least one wall (42, 43) of said housing being designed in a material, the melting temperature of which is substantially equal to the temperature threshold, and
- forming means for locally breaking the envelope when the pressure inside the envelope is greater than a pressure threshold, notably by forming a mechanically embrittled area on the envelope.

FIG. 1A

FIG. 1B

FIG. 2

EP 3 022 784 B1

**EP 3 022 784 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910723
- EP 1806807 A